# EUROPÄISCHE PATENTSCHRIFT

(11) **EP 1 915 239 B1**
(45) Veröffentlichungstag und Bekanntmachung des Hinweises auf die Patenterteilung: **21.07.2010**
(21) Anmeldenummer: 07703187.0
(22) Anmeldetag: 01.02.2007
(51) Int. Cl.: B25J 9/16

(54) **VERFAHREN ZUM ERZEUGEN EINES UMGEBUNGSBILDES**
METHOD FOR GENERATING AN ENVIRONMENTAL IMAGE
PROCÉDÉ POUR GÉNÉRER L'IMAGE D'UN ENVIRONNEMENT

(30) Priorität: 08.02.2006 DE 102006005958
(43) Veröffentlichungstag der Anmeldung: 30.04.2008
(73) Patentinhaber: KUKA Roboter GmbH, 86165 Augsburg (DE)
(72) Erfinder: BISCHOFF, Rainer, 86163 Augsburg (DE); KAZI, Arif, 73430 Aalen (DE)
(74) Vertreter: Lempert, Jost
(86) Internationale Anmeldenummer: PCT/EP2007/000854
(87) Internationale Veröffentlichungsnummer: WO 2007/090557

(56) Entgegenhaltungen:
- EP-A- 1 043 126
- EP-A- 1 477 934
- WO-A-2006/084385
- US-A- 5 745 387

## Beschreibung

Die Erfindung betrifft ein Verfahren zum Erzeugen eines räumlichen Umgebungsabbildes einer realen Umgebung. Das Dokument WO 2006 084385 offenbart ein solches Verfahren. Der Inhalt dieses Dokumentes gilt als Stand der Technik in Sinne vom Artikel 54 (3) EPÜ. Als reale Umgebung wird insbesondere der Arbeitsraum eines Manipulators bzw. die Manipulatorzelle eines Industrieroboters verstanden.

Die Erfindung bezieht sich vorzugsweise auf den Einsatz bei einem automatisch gesteuerten Manipulator nach EN ISO 8373 und insbesondere auf einen Roboter bzw. höchst vorzugsweise auf einen Gelenkroboter nach dieser Norm.

Zur genauen Vorabplanung und Programmierung der Bewegung eines Manipulators in seiner Umgebung werden Simulationsmodelle der realen Umgebung, wie bspw. der Roboterzelle benötigt. Dazu werden Objekte der realen Umgebung vermessen oder deren Maße aus bestehenden CAD-Geometriedaten übernommen und das Simulationsmodell auf Basis der Vermessungsdaten oder CAD-Daten erstellt.

Simulationsmodelle von Roboterzellen stimmen in der Praxis allerdings selten mit der Wirklichkeit überein, da Roboterzellen nie genau nach vorgegebenem Plan aufgebaut werden können und während des Zellaufbaus und der Inbetriebnahme einer Anlage noch Änderungen erfolgen können, die im Modell nicht nachgeführt werden. Auch die Vermessung erfolgt oft nicht in der gewünschten Genauigkeit.

Deshalb kann beispielsweise mittels 3D-Kameras (Stereokameras, spezielle Laserscanner) zunächst ein Abbild der Umgebung in Form von Positionsdaten, auch als Punktewolken bezeichnet, erzeugt werden, wobei dem Abbild oder jedem Bildpunkt zusätzlich auch eine Entfernungsinformation zugeordnet sein kann. Über manuellen Abgleich, d.h. manuelle Grobüberlagerung mehrerer Abbilder bzw. Punktewolken wird daraus mittels Geometrieprimitiven ein realitätsnahes Modell der Umgebung aufgebaut.

Ist bereits ein Simulationsmodell vorhanden, können die räumlichen Positionen der im Simulationsmodell enthaltenen Objekte über Matching-Verfahren so korrigiert werden, dass die Objekte des Simulationsmodells eine größtmögliche Überdeckung mit dem realitätsnahen Modell bzw. den Punktewolken aufweisen.

Es gibt keine automatisierten Verfahren, die Modell und Wirklichkeit miteinander abgleichen, die auf eine manuelle Grobüberlagerung verzichten können. Darüber hinaus sind Matching-Verfahren für eine Feinüberlagerung sehr rechenintensiv und lösen nicht notwendigerweise das oben genannte Problem, ein Modell mit genau den Ansichten aufzubauen, die der Roboter später zur Erfüllung seiner Aufgaben benötigt. Deshalb können im Simulationsmodell vorhandene Objekte auch nicht automatisch mit einer aufgenommenen Punktewolke abgeglichen werden.

Daneben ist es bekannt, einen Roboter mit Hilfe von Kraft-Moment-Sensoren herausfinden zu lassen, welche Objekte sich in seiner Umgebung befinden. Dabei wird bestimmt, welche Teile des Objekts berührt werden (Localisation) und welche geometrischen Eigenschaften das Objekt hat (Mapping). Dieses Verfahren ist allerdings auf Objekte beschränkt, die sich in der Reichweite des Robotersystems selbst befinden. Bedingt durch die Notwendigkeit eines physikalischen Kontakts zwischen Roboter und Umgebung kann es auch zu Kollisionsschäden (insbesondere bei Kollisionen mit dem Roboter bislang unbekannten Objekten) kommen.

Der Erfindung liegt die Aufgabe zugrunde, unter Vermeidung der vorgenannten Nachteile ein Verfahren bereit zu stellen, mittels dessen ein räumliches Umgebungsabbild der realen Umgebung eines Manipulators geschaffen werden kann, aufgrund dessen ein Modell ohne manuelle Zwischenschritte, d.h. automatisiert aufgebaut bzw. ein existierendes Modell korrigiert werden kann. Vorzugsweise soll ein einfaches Verfahren bereitgestellt werden, das schnell ist und deshalb auch für Echtzeitanforderungen verwendet werden kann.

Erfindungsgemäß wird die Aufgabe dadurch gelöst, dass Einzelaufnahmen durch mindestens einen Sensor aus verschiedenen Sensorposen heraus erstellt werden, wobei für eine Grobüberlagerung der Einzelaufnahmen jede Sensorpose auf Grundlage der Achsstellungswerte eines den Sensor aufweisenden Manipulators bestimmt wird.

In einer Ausgestaltung der Erfindung können Entfernungsinformation enthaltende, zumindest teilweise überlappende Einzelaufnahmen der Umgebung durch mindestens einen Sensor aus verschiedenen Sensorposen heraus erstellt und zur Überlagerung gebracht werden.

Unter Umgebungsbild wird dabei eine in sich konsistente Punktewolke bezeichnet, deren Punkte mit einem realen Objekt in Beziehung stehen, beispielsweise als Punkte einer Objektoberfläche oder -kante. Jeder Punkt ist eindeutig durch seine Koordinaten im Raum beschrieben. Aufgrund eines solchen Umgebungsbildes kann ein Modell der Einsatzumgebung geschaffen werden bzw. eine Anpassung eines solchen erfolgen. Als Modell wird dabei eine Repräsentation des Umgebungsbildes bezeichnet, bei dem Geometrieprimitive, wie Linien, Flächen, Quader, Ellipsoide etc. so in der Punktewolke platziert sind, dass der Abstandsfehler eines Punktes zu dem zugehörigen Geometrieprimitiv minimal ist. Die Geometrieprimitive entsprechen dann einzeln oder in Kombination den realen Objekten in der Umgebung bzw. Zelle.

Durch das erfindungsgemäße Verfahren erfolgt eine exakte Erfassung der Umgebung des automatisch gesteuerten Manipulators und damit die Erstellung eines Umgebungsabbildes, aufgrund dessen ein Modell der Umgebung im vorgenannten Sinne aufgebaut bzw. ein vorhandenes solches Modell an die realen Verhältnisse angepasst werden kann.

Als Sensoren werden berührungslos arbeitende vorzugsweise optische Sensoren eingesetzt. Die Sensoren können zusätzlich als abstandsgebende Sensoren ausgebildet sein. Grundsätzlich ist es möglich, die Teilbilder aus einer Pose des Roboters heraus mittels 1D-Abstandssensoren, wie Infrarotsensoren, oder mittels Lasertriangulation zu erstellen, wobei eine feste Relation zur mechanischen Schnittstelle des Manipulators (Handflansch) gegeben ist. In diesem Falle muss der Manipulator sich mit einer mechanischen Schnittstelle dann wie eine Ablenkeinheit eines 2D-Laserscanners verhalten und den Messstrahl hochgenau positionieren. Eine solche einfache Ausgestaltung ist insbesondere sinnvoll, wenn der Manipulator nur eine bestimmte Bahn, gegebenenfalls erneut, kalibrieren soll und/oder die Einhaltung einer solchen Bahn durch einen 1D-Abstandssensor zu überwachen ist oder aber auch, wenn einige Messpunkte zum Abgleich des Modells mit der Wirklichkeit ausreichen.

In bevorzugter Weise werden aber zumindest selbst in einer vorgegebenen Ebene abtastende Sensoren eingesetzt, die insbesondere nicht nur über eine Linie Abstandsinformationen liefern, sondern zumindest in einem bestimmten (flächenförmigen) Gesichtsfeld, also Sensoren, wie 2D-Laserscanner, aber höchst vorzugsweise 3D-Kameras, wie Stereokameras, Tiefenbildkameras oder aber auch Laufzeit messende Kameras. Die Sensoren können grundsätzlich in fester Zuordnung zur mechanischen Schnittstelle des Manipulators (Handflansch) angeordnet werden. In bevorzugter Ausgestaltung werden unabhängig vom Manipulator aktiv bewegte Sensoren, wie beispielsweise Laserscanner mit motorisierten Neigeeinheiten eingesetzt, wenn der Sensor nicht, wie eine Kamera, von sich aus von vornherein ein zweidimensionales Gesichtsfeld aufnimmt.

Weiterhin können vorzugsweise auch Kombinationen von Sensoren, wie herkömmliche Videokameras und Infrarot-Abstandsmesser eingesetzt werden. Sensorkombinationen können so ausgelegt sein, dass sich die Sensoren in ihrem Messbereich ergänzen, wobei beispielsweise Ultraschallsensoren für einen Fernbereich und Infrarot oder Lasertriangulation für eine exakte Entfernungsbestimmung im Nahbereich kombiniert werden können.

In einer bevorzugten Ausgestaltung der Erfindung können zwei oder mehr gleichartige Sensoren derart eingesetzt werden, dass ihr Messfeld sich ergänzt, wie z.B. zwei um 90° zueinander angeordnete Laserscanner, mittels derer zwei um 90° gegeneinander verschwenkte Messebenen abgetastet werden. In einer bevorzugten Ausgestaltung der Erfindung kann darüber hinaus vorgesehen sein, dass die Umgebung durch zwei einander entgegengerichtete Sensoren erfasst wird. Die Sensoren, wie Laserscanner, stehen damit "Rücken an Rükken", so dass fast ein 360°-Gesichtsfeld in einer Ebene abgedeckt wird. In einer weiteren Ausbildung der Erfindung kann vorgesehen sein, dass Sensoren über die gesamte Roboterstruktur verteilt angeordnet sind, damit alle den Roboter umgebenden Bereiche in gleichen Maßen erfasst werden können.

Wenn die Erfindung auch bevorzugt zur Erfassung der normalen Umgebung eines Manipulators, wie eine Roboterzelle, eingesetzt wird, können, insbesondere wenn die Umgebung nicht sehr markant ist, zusätzliche künstliche Landmarken als Referenzpunkte eingefügt werden, wie beispielsweise Kugeln mit bekanntem Durchmesser.

In äußerst bevorzugter Weiterbildung der Erfindung ist vorgesehen, dass im Zuge der Überlagerungsoperation der Einzelaufnahmen die Relation der Posen des oder der Sensoren bei Erstellung der Einzelaufnahmen und/oder die Pose der Sensoren im Umgebungsraum bestimmt wird.

In weiterer bevorzugter Ausgestaltung ist vorgesehen, dass bei Erstellung der Aufnahmen Stellungssignale manipulator-interner Sensoren, wie Winkelgeber, erfasst werden, wobei insbesondere eine Grobüberlagerung der Einzelaufnahmen aufgrund der jeweiligen Positionsbestimmung der manipulatorinternen Sensoren erfolgt. Hierdurch kann das erfindungsgemäß vorgenommene Überlagern der Einzelbilder im Rahmen einer Grobüberlagerung zunächst einfacher und schneller erfolgen, als wenn die Grobüberlagerung sogleich durch Feinabstimmungsverfahren, wie ein iteratives Verfahren, erfolgt.

In bevorzugter Weiterbildung ist dann allerdings vorgesehen, dass die Überlagerung der Einzelbilder mittels eines an sich bekannten simultanen Lokalisierungs- und Kartierungs-Verfahrens (SLAM-Verfahren) zur Erzeugung eines genauen 3D-Bildes zur Deckung gebracht werden, wobei entweder die Einzelaufnahmen mittels eines Korrelationsverfahrens zur Deckung gebracht werden oder die Einzelbilder durch iteratives Verschieben zur Deckung gebracht werden, wobei in letztgenanntem Fall derart vorgegangen wird, dass die Einzelbilder so lange verschoben werden, bis Fehler im Messraum minimal sind bzw. eine vorgegebene Fehlergrenze unterschritten wird.

Ein wesentlicher Vorteil der Erfindung liegt darin, mit relativ wenigen Mitteln, nämlich einem automatisch gesteuerten Manipulator und einem abstandsgebenden Sensor, ein genaues Abbild bzw. Modell der Zelle generieren zu können.

Ein anderer Vorteil ist, dass das Modell aus Sicht des Manipulators aufgebaut werden kann und so alle relevanten Umgebungsmerkmale enthält, die für den Betrieb benötigt werden. Das Verfahren eignet sich damit auch zur Vermessung von Werkstücken.

Einen genügend schnellen Algorithmus und Sensoren vorausgesetzt, können mit Hilfe dieses Verfahrens neben der Position des Manipulators auch Bahnparameter, wie Geschwindigkeit und Beschleunigung exakt ermittelt werden.

Das vorgestellte Verfahren ist darüber hinaus auch allgemein in der Lage, die Positioniergenauigkeit von Manipulatoren in ihrem Arbeitsbereich zu verbessern. Dies kann z.B. vorteilhaft sein, wenn ein absolutgenau vermessener Industrieroboter in der Anlage seine Kalibration verliert. Mit dem vorgestellten Verfahren ist eine einfache Vermessung des Roboters in seinem Arbeitsbereich in der Anlage möglich.

Ein weiterer Vorteil der Erfindung ergibt sich in Verbindung mit dem Verfahren der DE 102004026185.7.

Bei diesem Verfahren ist die genaue Kenntnis des Anbringungspunkts einer am Roboter angebrachten Kamera kritisch für die räumliche exakte Augmentierung von TCP-Bahnen etc. Die entsprechenden Informationen lassen sich mit der hier beschriebenen Erfindung ebenfalls ableiten.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnungen im Einzelnen erläutert ist. Dabei zeigt:
- Fig. 1: eine vereinfachte bildliche Darstellung des Einsatzes des erfindungsgemäßen Ver- fahrens;
- Fig. 2: ein Ablaufdiagramm einer bevorzugten Aus- führungsform des erfindungsgemäßen Ver- fahrens.

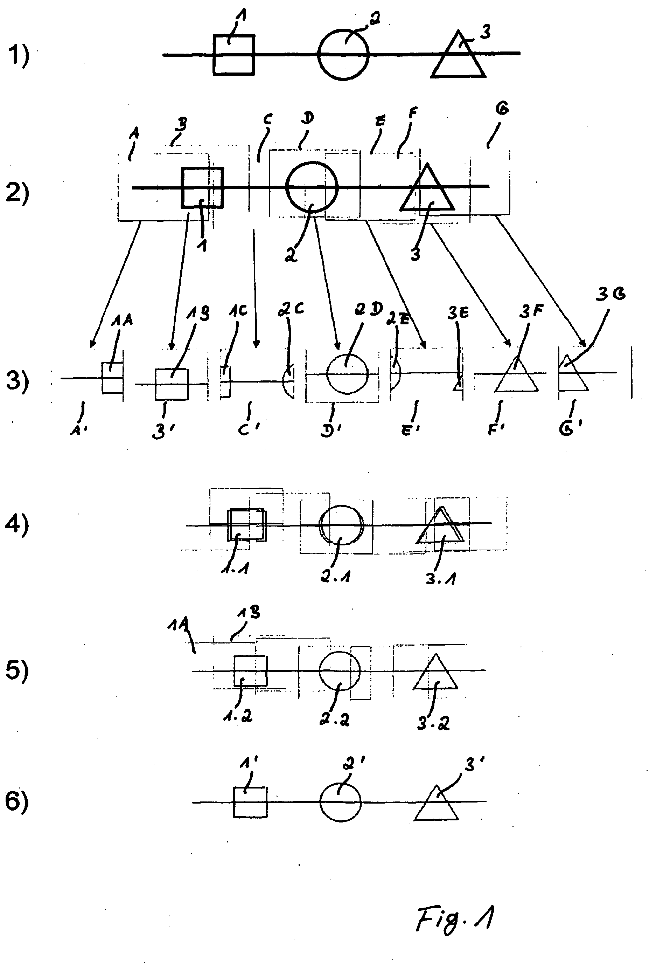

In der Fig. 1 ist zunächst dargestellt, wie mehrere Einzelbilder einer Umgebung in drei Objekten, die aus verschiedenen Posen (beinhaltend Ort (Position) und Ausrichtung) eines Sensors, wie einer herkömmlichen Videokamera, aufgenommen wurden, zur Überlagerung gebracht werden, wobei aus der Überlagerungsprozedur mit hoher Genauigkeit die Relation (Koordinatentransformation) der genauen Posen bei der Erstellung der Einzelaufnahmen und auch - bei bekannter Position der Objekte im Raum - die Absolutposen bestimmt werden können.

Die Fig. 1 zeigt unter 1.1 zunächst schematisch drei Objekte 1, 2, 3.

Unter Schritt 1.2 sind wiederum die drei Objekte 1, 2, 3 dargestellt. Zusätzlich sind die von einem zweidimensionalen Bildausschnitt erfassenden Sensor von verschiedenen Positionen aus erfassten Bildausschnitte A, B, C, D, E, F, G in Überlagerung mit den Objekten 1 bis 3 dargestellt. Unter Schritt 1.3 sind die von den Sensoren aufgenommenen Bilder A' bis G' der Umgebung mit den von dem jeweiligen Bild A' bis G' erfassten Teilabbildungen 1A bis 1C, 2C bis 2E, 3E bis 3G der Objekte 1 bis 3 dargestellt, wie der Sensor diese (und die Umgebung) zu bestimmten Zeitpunkten während seiner Bewegung aus verschiedenen Posen aufnimmt.

In einem ersten Grob-Schätzungsschritt, der beispielsweise aufgrund mittels roboterinternen Sensoren, wie Winkelenkodern, ermittelten Posen des die Bilder aufnehmenden Umgebungssensors beruht, wird eine erste Grobschätzung oder Überlagerung 1.1, 2.1, 3.1 der Bilder der Objekte 1 bis 3 vorgenommen.

Im Schritt 1.5 erfolgt dann mittels eines an sich bekannten Verfahrens, wie eines Korrelationsverfahrens, eines iterativen Verfahrens oder eines sonstigen simultanen Lokalisierungs- und Kartenaufbau-Verfahrens (SLAM-Verfahren genannt) eine genaue zurdeckungbringung der Daten, so dass ein genaues 3D-Bild der Einsatzumgebung des Roboters, wie in einer Punktewolke der Umgebung, entsteht. Eine Iteration kann beispielsweise so lange durchgeführt werden, bis der Fehler im Messraum minimal ist bzw. eine vorgegebene Fehlergrenze unterschritten wird. Das durch Einzelbilder A bis G aus verschiedenen Positionen des Sensors zusammengestellte Umgebungsbild mit den Bildern 1', 2', 3' der Objekte 1, 2, 3 ist dann im Schritt 1.6 der Fig. 1 dargestellt. An den bei der Überlagerung gewonnenen Transformationsdaten können dann, wie gesagt, die Relationsposen des Sensors bei den jeweiligen Aufnahmen und unter Heranziehung der Positionen der Objekte 1 bis 3 im Raum bestimmt werden. Dadurch kann beim späteren Betrieb des Roboters durch Bilderkennung deren genaue Pose im Raum und damit auch die des Tool-Center-Punktes (TCP) bestimmt werden.

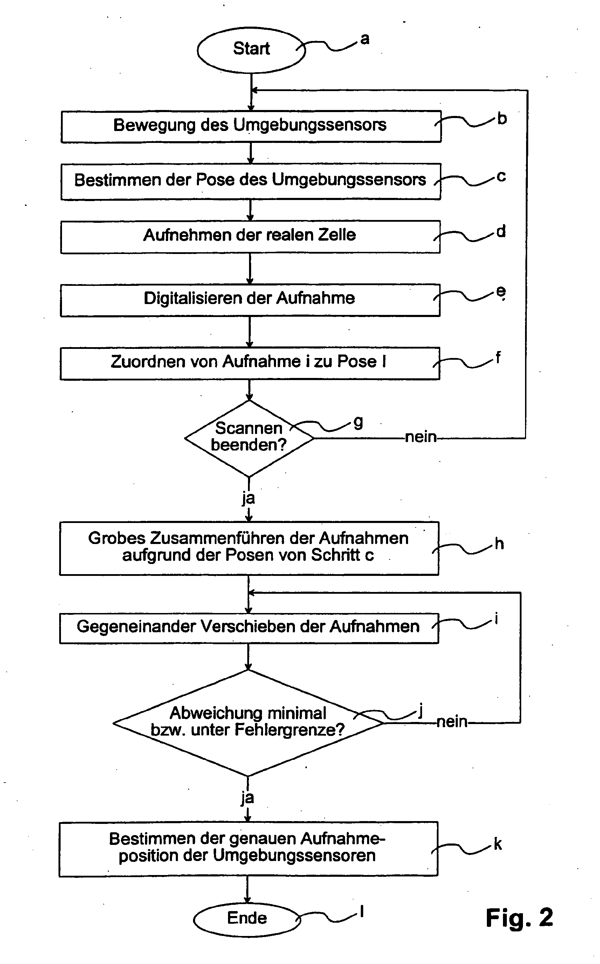

Die Fig. 2 zeigt den wesentlichen Verfahrensablauf des erfindungsgemäßen Verfahrens.

Nach dem Start des Verfahrens gemäß Schritt a wird ein Bewegungssensor oder werden auch mehrere Bewegungssensoren, die vorzugsweise an einem Roboter, insbesondere in einer definierten Position und Orientierung zum Handflansch eines solchen angeordnet sind, bewegt (Schritt b). Die Bewegungsbahn kann grundsätzlich in einem Simulationssystem erzeugt werden, wobei die zu vermessenden Objekte in einer Roboterzelle zunächst durch einen Nutzer vorgegeben werden. Auf der Basis von identifizierbaren charakteristischen geometrischen Merkmalen dieser Objekte, z.B. Kanten oder Flächen, und mit Hilfe bekannter Algorithmen für die kollisionsfreie Bahnplanung werden die Bahnen automatisch generiert. In einer anderen Ausgestaltung der Erfindung bestimmt ein Roboter zu Beginn der Exploration zunächst in seiner augenblicklichen Pose hindernisfreie Regionen. Hierzu ist er beispielsweise mit Sensoren ausgestattet, mittels derer er ermitteln kann, in welche Richtungen er sich bewegen darf. Der Roboter kann zunächst mit kleinen Bewegungen anfangen, um ein Abbild der unmittelbaren Umgebung zu erzeugen. Wenn seine unmittelbare Umgebung erkundet ist, werden weitere, bis dahin außerhalb des Gesichtsfelds liegende, noch unbekannte Regionen gezielt, d.h. mittels kollisionsfreier Bahnplanung ermittelter Bahnen angefahren und erkundet. Ein Vorteil dieser Ausgestaltung liegt darin, dass für die automatische Erzeugung der Explorationsbewegung kein A-Priori-Modellwissen vorliegen muss.

Auch kann das Sensorsystem manuell durch einen Nutzer gesteuert werden, wie über Verfahrtasten, einem Joystick, eine 6D-Maus, einem Führungsbügel am Roboter oder dergleichen. So ist gleichzeitig ein - vom Benutzer zu überwachendes - kollisionsfreies und gezieltes Verfahren und Ausrichten des Roboters möglich.

In einer angefahrenen Aufnahmeposition erfolgt gemäß Schritt c ein Bestimmen der Pose des Umgebungssensors sowie die Aufnahme eines Bildausschnitts der realen Zelle (Schritt d).

Die Aufnahme wird digitalisiert und der zugehörigen Pose zugeordnet (Schritt f).

Die vorgenannten Schritte der Durchführung einer Aufnahme und Bearbeitung derselben sowie Zuordnung zu einer Pose können für mehrere Posen des oder der Sensoren wiederholt werden (Schritt g). Wenn keine Echtzeitanforderungen gegeben sind, können die Schritte e und f auch nach Erstellen sämtlicher Aufnahmen (nach Schritt g) durchgeführt werden.

Im folgenden Schritt h erfolgt ein grobes zusammenführen der Aufnahmen aufgrund der im Schritt c bestimmten Posen des Umgebungssensors oder der Umgebungssensoren, wie dies im Einzelnen unter Bezugnahme auf Fig. 1.4 erläutert wurde.

Danach erfolgt die schon unter Bezug auf Fig. 1.5 erläuterte Teilabstimmung der Bilder durch Verschieben der Einzelaufnahmen nach einem geeigneten Verfahren so lange, bis die Fehler im Messraum minimal sind bzw. eine vorgegebene Fehlergrenze unterschritten ist (Schritte i und j); soweit dies nicht der Fall ist, erfolgt ein Rücksprung vor den Schritt i und eine erneute Ausführung desselben.

Anschließend kann nun mittels des geschaffenen Umgebungsbildes die genaue Aufnahmeposition der Umgebungssensoren bestimmt werden - mit höherer Genauigkeit als dies durch die roboterinternen Sensoren, wie Winkelgeber, möglich ist. Insbesondere kann so erfindungsgemäß die Positioniergenauigkeit von Industrierobotern in ihrer Arbeitszelle verbessert werden.

## Patentansprüche

1. Verfahren zum Erzeugen eines räumlichen Umgebungsbildes einer realen Umgebung, wie einer Manipulatorzelle eines Manipulators, durch Überlagerung von Einzelaufnahmen der Umgebung, **dadurch gekennzeichnet, dass** die Einzelaufnahmen durch mindestens einen Sensor aus verschiedenen Sensorposen heraus erstellt werden, wobei für eine Grobüberlagerung der Einzelaufnahmen jede Sensorpose auf Grundlage der Achsstellungswerte eines den Sensor aufweisenden Manipulators bestimmt wird.

2. Verfahren nach Anspruch 1, **dadurch gekennzeichnet, dass** Entfernungsinformationen enthaltende, zumindest teilweise überlappende Einzelaufnahmen der Umgebung durch den mindestens einen Sensor aus verschiedenen Sensorposen heraus erstellt werden und dass diese Einzelaufnahmen zur Überlagerung gebracht werden.

3. Verfahren nach Anspruch 1 oder 2, **dadurch gekennzeichnet, dass** im Zuge der Überlagerungsoperation der Einzelaufnahmen die Relation der Posen des oder der Sensoren bei Erstellung der Einzelaufnahmen und/oder die Pose der Sensoren im Umgebungsraum bestimmt wird.

4. Verfahren nach Anspruch 1 bis 3, **dadurch gekennzeichnet, dass** bei Erstellung der Aufnahmen Stellungssignale manipulator-interner Sensoren, wie Winkelgeber, erfasst werden.

5. Verfahren nach einem der Ansprüche 1 bis 4, **dadurch gekennzeichnet, dass** die Einzelbilder zur Erzeugung eines genauen 3D-Bildes in einer Feinüberlagerung zur Deckung gebracht werden.

6. Verfahren nach einem der Ansprüche 1 bis 5, **dadurch gekennzeichnet, dass** die Umgebung mittels berührungsloser Sensoren erfasst wird.

7. Verfahren nach einem der Ansprüche 1 bis 6, **dadurch gekennzeichnet, dass** die Umgebung mittels mindestens einer Kamera als Umgebungssensor erfasst wird.

8. Verfahren nach einem der Ansprüche 1 bis 7, **dadurch gekennzeichnet, dass** die Umgebung mittels abstandsgebender Sensoren erfasst wird.

9. Verfahren nach einem der Ansprüche 1 bis 8, **dadurch gekennzeichnet, dass** die Umgebung durch zwei Laserscanner erfasst wird, deren Scanebenen um 90° gegeneinander verdreht sind.

10. Verfahren nach einem der Ansprüche 1 bis 9, **dadurch gekennzeichnet, dass** die Bewegungsbahnen und Aufnahmepositionen der Sensoren automatisch generiert werden.

## Claims

1. A method of generating a spatial environment image of a real environment, such as a manipulator cell of a manipulator, by superimposing individual recorded images of the environment, **characterised in that** the individual recorded images are created by at least one sensor from various sensor poses, each sensor pose being determined, for a rough superimposition of the individual recorded images, on the basis of the axis position values of a manipulator comprising the sensor.

2. A method according to claim 1, **characterised in that** at least partially overlapping individual recorded images of the environment containing distance information are created by the at least one sensor from various sensor poses and **in that** these individual recorded images are superimposed.

3. A method according to claim 1 or claim 2, **characterised in that**, in the course of superimposing the individual recorded images, the relationship of the poses of the sensor or sensors when creating the individual recorded images and/or the pose of the sensors in the environmental space is determined.

4. A method according to claim 1 to claim 3, **characterised in that**, when creating the recorded images, position signals of sensors internal to the manipulator, such as phase-angle sensors, are detected.

5. A method according to any one of claims 1 to 4, **characterised in that** the individual images are aligned in a precise superimposition operation to generate an accurate 3D image.

6. A method according to any one of claims 1 to 5, **characterised in that** the environment is detected by means of contactless sensors.

7. A method according to any one of claims 1 to 6, **characterised in that** the environment is detected by means of at least one camera as environment sensor.

8. A method according to any one of claims 1 to 7, **characterised in that** the environment is detected by means of distance-sensing sensors.

9. A method according to any one of claims 1 to 8, **characterised in that** the environment is detected by two laser scanners, whose scanning planes are rotated by 90° relative to one another.

10. A method according to any one of claims 1 to 9, **characterised in that** the movement paths and recording positions of the sensors are generated automatically.

## Revendications

1. Procédé de génération d'une image d'environnement dans l'espace à partir d'un environnement réel, tel qu'une cellule de manipulateur d'un manipulateur, par superposition de clichés individuels de l'environnement, **caractérisé en ce que** les clichés individuels sont produits à l'aide d'au moins un capteur à partir de différentes poses du capteur, chaque pose de capteur étant déterminée pour une superposition grossière des clichés individuels sur la base des valeurs de position axiale d'un manipulateur doté du capteur.

2. Procédé selon la revendication 1, **caractérisé en ce que** les clichés individuels de l'environnement contenant des informations de distance et se chevauchant au moins en partie sont fabriqués par l'au moins un capteur à partir des différentes poses de capteur et **en ce que** ces clichés individuels sont amenés en superposition.

3. Procédé selon la revendication 1 ou 2, **caractérisé en ce qu'**au cours de l'opération de superposition des clichés individuels, on détermine la relation des poses du ou des capteurs par réalisation de clichés individuels et/ou la pose des capteurs dans l'espace environnant.

4. Procédé selon la revendication 1 à 3, **caractérisé en ce que** lors de la réalisation des clichés, des signaux de position de capteurs internes au manipulateur, tels que des capteurs d'angle, sont détectés.

5. Procédé selon l'une quelconque des revendications 1 à 4, **caractérisé en ce que** les images individuelles sont amenées en superposition fine pour produire une image 3D précise présentant un parfait chevauchement.

6. Procédé selon l'une quelconque des revendications 1 à 5, **caractérisé en ce que** l'environnement est détecté à l'aide de capteurs sans contact.

7. Procédé selon l'une quelconque des revendications 1 à 6, **caractérisé en ce que** l'environnement est détecté à l'aide d'au moins une caméra servant de capteur d'environnement.

8. Procédé selon l'une quelconque des revendications 1 à 7, **caractérisé en ce que** l'environnement est détecté à l'aide de capteurs de mesure de la distance.

9. Procédé selon l'une quelconque des revendications 1 à 8, **caractérisé en ce que** l'environnement est détecté à l'aide de deux lecteurs laser dont les plans de balayage sont décalés de 90° l'un par rapport à l'autre.

10. Procédé selon l'une quelconque des revendications 1 à 9, **caractérisé en ce que** les trajectoires de déplacement et les positions de cliché des capteurs sont générées automatiquement.
